# EUROPEAN PATENT APPLICATION

(11) **EP 3 190 645 A1**
(43) Date of publication of application: **12.07.2017**
(21) Application number: 14901535.6
(22) Date of filing: 12.09.2014
(51) Int. Cl.: H01M 4/04

(54) **ELECTRODE PLATE COATING REMOVAL APPARATUS**

(71) Applicant: Dongguan Amperex Technology Limited, Dongguan 523808 (CN); NingDe Amperex Technology Limited, 352100 Ningde City Fujian (CN)
(72) Inventor: ZHANG, Bin, Dongguan Guangdong 523808 (CN); ZHAO, Yi, Dongguan Guangdong 523808 (CN); CHEN, Mugui, Dongguan Guangdong 523808 (CN); HE, Ping, Dongguan Guangdong 523808 (CN); FANG, Hongxin, Dongguan Guangdong 523808 (CN)
(74) Representative: Manitz Finsterwald Patentanwälte PartmbB
(86) International application number: PCT/CN2014/086410
(87) International publication number: WO 2016/037355

(57) **Abstract**

A device for removing a coating layer of an electrode plate, an electrode plate comprises a current collector and a coating layer coated on each of at least one surface of the current collector, the device for removing the coating layer of the electrode plate comprises: a conveying system for conveying the electrode plate which has the coating layer to be removed; at least one wetting mechanism, each wetting mechanism is provided at the coating layer to be removed on one surface of the electrode plate which is conveyed by the conveying system and wets the coating layer on the one surface of the electrode plate within the region where the coating layer will be removed by using a solvent; a laser removing system; and a control system communicating with the conveying system, the wetting mechanism and the laser removing system. The laser removing system comprises: at least one laser emitting head for emitting a laser beam and projecting the laser beam onto the coating layer on the corresponding surface of the electrode plate within the region where the coating layer will be removed and which is wetted by the wetting mechanism to make the solvent which wets the coating layer of the electrode plate within the region where the coating layer will be removed vaporized, so as to remove the coating layer on the surface of the electrode plate within the region where the coating layer will be removed and in turn expose the current collector on the surface of the electrode plate corresponding to the region where the coating layer will be removed.

## Description

### FIELD OF THE INVENTION

The present invention relates to a field of energy storage device, and particularly relates to a device for removing a coating layer of an electrode plate.

### BACKGROUND OF THE INVENTION

Lithium-ion battery has been widely concerned due to its advantages, such as high energy density, environment-friendly and the like, and has been widely applied in electronic devices, such as a mobile phone, a laptop and the like, and with technical development of electric vehicle, application of the lithium-ion battery in the field of electric vehicle is becoming more and more concerned.

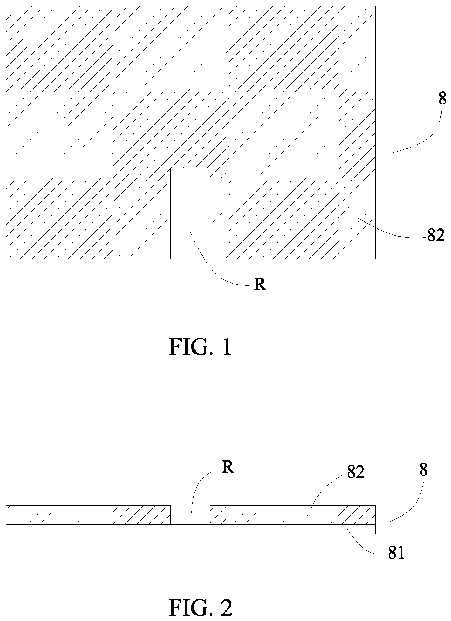

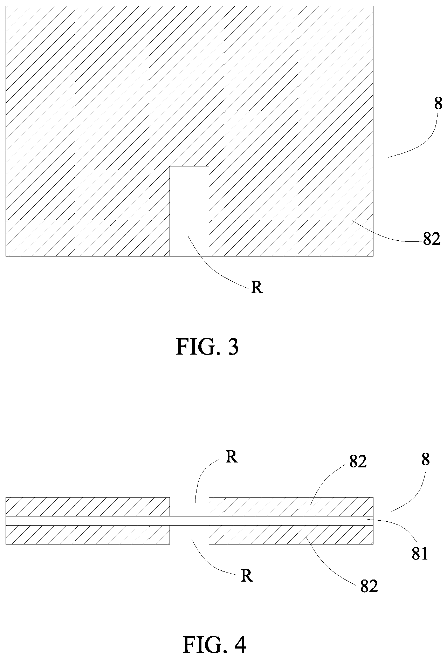

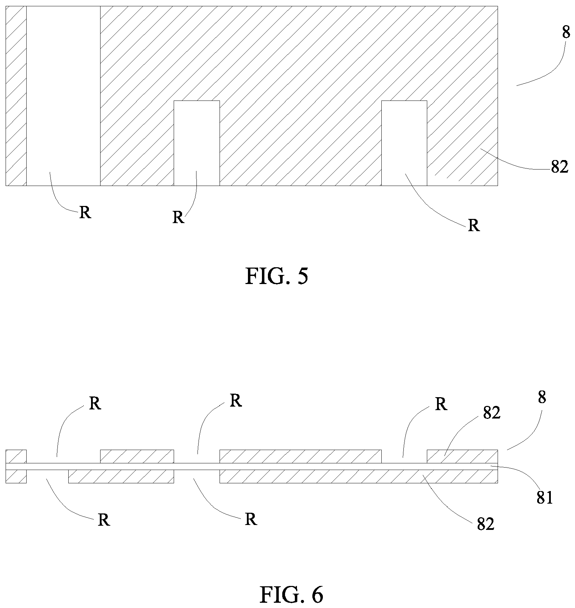

Although demand for the lithium-ion battery from market is becoming more and more large, manufacturing speed of the lithium-ion battery having high energy density is hard to promote. This is because: in processes for manufacturing the lithium-ion battery, one important process which affects the manufacturing speed of the lithium-ion battery is a process for welding an electrode tab onto an electrode plate of the lithium-ion battery, as shown in FIG. 1 and FIG. 2, a coating layer 82 of an electrode plate 8 is continuous due to coating, or an electrode tab needs to be soldered to the middle portion of the electrode plate, in order to realize that an electrode tab is welded onto the electrode plate 8, firstly the coating layer 82 of the electrode plate 8 within a region where the electrode tab will be welded (or this region is referred to as a region R where the coating layer will be removed) needs to be removed. And, in some special process of manufacturing the battery, it further requires to remove coating layers 82 in different shapes at different positions of the electrode plate 8 of the battery. For example, as shown in FIG. 3, FIG.4, FIG.5 and FIG.6, it sometimes further requires to remove the coating layer 82 within the region R where the coating layer will be removed at corresponding positions of the two surfaces of the electrode plate 8.

At present, commonly used removing methods comprise a mechanical scrape removing method and a chemical removing method, however, these two removing methods have many problems: the mechanical removing is difficult to ensure cleanness of removing, particularly for a thin electrode plate, the mechanical removing further easily scratches the electrode plate; the chemical removing damages the environment to a certain extent, has disadvantages, such as poor working environment, low manufacturing efficiency and the like. In view of deficiencies existing in the above two methods, United States patent No. US 8,309,880 B2, which is issued on November 13, 2012, discloses a method for removing a coating layer of an electrode plate by means of a laser beam, and resolves the problems existing in the above two removing methods.

However, the method in this patent has the following deficiencies:

Firstly, the principle of laser removing is: under the action of laser, the coating layer adsorbs a certain energy, particles of the coating layer are gasified, sublimed and vibrated and the like, so that the coating layer is removed. Because an energy distribution of a laser beam emitted from a laser device generally is Gaussian distribution, the laser beam has high energy in the middle and low energy at an edge under such a distribution. However, a certain range of energy is required to remove the coating layer 82 of the electrode plate 8, so in such a laser beam whose energy is distributed as Gaussian distribution, relative high energy in the middle easily damages a foil (because a current collector 81 of the electrode plate 8 of the battery generally is a Cu foil and an A1 foil, a thickness of the current collector 81 is several microns to ten microns, such a high energy part quite easily penetrates A1 foil or Cu foil), thereby affecting removing quality and welding quality of the electrode tab; but energy at the edge is lower than the energy required on removing, so the coating layer remains at a position corresponding to the energy at the edge, thereby also affecting the removing quality. At the same time, these high energy and low energy make energy utilization rate quite low because they cannot be effectively utilized.

Secondly, while the coating layer 82 of the electrode plate 8 is removed by laser, under the action of laser, the coating layer 82 is heated, stress in the coating layer 82 will be changed, which in turn results in deformation of the electrode plate 8; after the coating layer 82 is removed, because residual stress is released, the electrode plate 8 will also generate a slight deformation, which in turn affects later welding of the electrode tab.

Thirdly, in this patent, an inert gas is blown toward the region of the electrode plate 8 where the coating layer has been removed, so as to realize cleaning and cooling of the electrode plate 8. However, particles within the region where the coating layer has been removed cannot be completely got rid of by such a manner, so that the particles will remain around the region where the coating layer has been removed, and affect property of the battery.

Fourthly, during removing, the laser will ceaselessly accelerate and decelerate at a corner of the region where the coating will be removed, which thus results in removing quality unstable upon moving of a laser head, a removing size not precise, so such a manner is hard to realize mass production.

### SUMMARY OF THE INVENTION

In view of the problem existing in the background, an object of the present invention is to provide a device for removing a coating layer of an electrode plate, which can avoid damage to the electrode plate.

Another object of the present invention is to provide a device for removing a coating layer of an electrode plate, which can avoid the deformation of the electrode plate.

Another object of the present invention is to provide a device for removing a coating layer of an electrode plate, which can promote the energy utilization rate, the removing quality and the removing efficiency of the laser.

In order to achieve the above objects, the present invention provides a device for removing a coating layer of an electrode plate, an electrode plate comprises a current collector and a coating layer coated on each of at least one surface of the current collector, the device for removing the coating layer of the electrode plate comprises: a conveying system for conveying the electrode plate which has the coating layer to be removed; at least one wetting mechanism, each wetting mechanism is provided at the coating layer to be removed on one surface of the electrode plate which is conveyed by the conveying system and wets the coating layer on the one surface of the electrode plate within the region where the coating layer will be removed by using a solvent; a laser removing system; and a control system communicating with the conveying system, the at least one wetting mechanism and the laser removing system. The laser removing system comprises: at least one laser emitting head for emitting a laser beam and projecting the laser beam onto the coating layer on the corresponding surface of the electrode plate within the region where the coating layer will be removed and which is wetted by the wetting mechanism to make the solvent which wets the coating layer of the electrode plate within the region where the coating layer will be removed vaporized, so as to remove the coating layer on the surface of the electrode plate within the region where the coating layer will be removed and in turn expose the current collector on the surface of the electrode plate corresponding to the region where the coating layer will be removed.

The present invention has the following beneficial effects:

In the device for removing the coating layer of the electrode plate according to the present invention, the wetting mechanism is provided and the coating layer of the electrode plate within the region where the coating layer will be removed is wetted in advance by using the solvent, after the laser removing system emits the laser beam on the wetted electrode plate, the solvent existing in the electrode plate can directly or indirectly absorb the energy of the laser beam so as to be instantaneously vaporized, or the particles of the coating layer absorb the energy of the laser beam, so that the temperature at the interface between the particles of the coating layer and the solvent instantaneously increases via interface heat transfer and the temperature at the interface is far more above the vaporization (evaporation) temperature of the solvent, an explosive evaporation of the solvent occurs, thereby generating a strong transient pressure, the particles of the coating layer are peeled off from the current collector under the action of the strong pressure, so as to remove the particles of the coating layer. Because the pressure is instantaneously generated, the transient pressure will not damage the electrode plate, and the energy of the laser beam is directly or indirectly absorbed by the solvent, the current collector of the electrode plate will not be damaged, meanwhile, the coating layer is removed from the electrode plate under the action of the pressure generated by the instantaneous vaporization of the solvent, the residual stress after the coating layer is removed is small, thereby avoiding the deformation of the electrode plate; furthermore, the energy utilization rate of the laser, the removing quality and the removing efficiency can be promoted.

### BRIEF DESCRIPTION OF THE DRAWINGS

FIG. 1 is a top view of an embodiment of an electrode plate in a device for removing a coating layer of an electrode plate according to the present invention;
FIG. 2 is a front view of FIG. 1;
FIG. 3 is a top view of an embodiment of the electrode plate in the device for removing the coating layer of the electrode plate according to the present invention;
FIG. 4 is a front view of FIG. 3;
FIG. 5 is a top view of an embodiment of the electrode plate in the device for removing the coating layer of the electrode plate according to the present invention;
FIG. 6 is a front view of FIG. 5;
FIG. 7 is a schematic view illustrating an embodiment of the device for removing the coating layer of the electrode plate according to the present invention;
FIG. 8 is a schematic view illustrating an embodiment of the device for removing the coating layer of the electrode plate according to the present invention;
FIG. 9 is a schematic view illustrating an embodiment of the device for removing the coating layer of the electrode plate according to the present invention;
FIG. 10 is a schematic view illustrating an embodiment of the device for removing the coating layer of the electrode plate according to the present invention.

Reference numerals are represented as follows:
1 conveying system
11 unwinding roller
12 winding roller
13 fixing roller
14 deviation rectifying mechanism
15 guiding roller
16 buffering roller
2 wetting mechanism
3 laser removing system
31 laser emitting head
32 sensor
33 adsorption fixing mechanism
34 cooling mechanism
35 beam shaping mechanism
36 galvanometer scanning mechanism
37 focusing lens
38 beam path switching mechanism
4 control system
5 dust collecting mechanism
6 dust sticking mechanism
7 quality monitoring system
8 electrode plate
81 current collector
82 coating layer
R region where the coating layer will be removed

### DETAILED DESCRIPTION OF THE INVENTION

Hereinafter a device for removing a coating layer of an electrode plate according to the present invention will be described in combination with the figures.

Referring to FIG. 1 to FIG. 10, in a device for removing a coating layer of an electrode plate according to the present invention, an electrode plate 8 comprises a current collector 81 and a coating layer 82 coated on each of at least one surface of the current collector 81, the device for removing the coating layer of the electrode plate comprises: a conveying system 1 for conveying the electrode plate 8 which has the coating layer 82 to be removed; at least one wetting mechanism 2, each wetting mechanism 2 is provided at the coating layer 82 to be removed on one surface of the electrode plate 8 which is conveyed by the conveying system 1 and wets the coating layer 82 on the one surface of the electrode plate 8 within the region R where the coating layer will be removed by using a solvent; a laser removing system 3; and a control system 4 communicating with the conveying system 1, the at least one wetting mechanism 2 and the laser removing system 3. The laser removing system 3 comprises: at least one laser emitting head 31 for emitting a laser beam and projecting the laser beam onto the coating layer 82 on the corresponding surface of the electrode plate 8 within the region R where the coating layer will be removed and which is wetted by the wetting mechanism 2 to make the solvent which wets the coating layer 82 of the electrode plate 8 within the region R where the coating layer will be removed vaporized, so as to remove the coating layer 82 on the surface of the electrode plate 8 within the region R where the coating layer will be removed and in turn expose the current collector 81 on the surface of the electrode plate 8 corresponding to the region R where the coating layer will be removed.

In the device for removing the coating layer of the electrode plate according to the present invention, the wetting mechanism 2 is provided and the coating layer 82 of the electrode plate 8 within the region R where the coating layer will be removed is wetted in advance by using the solvent, after the laser removing system 3 emits the laser beam on the wetted electrode plate 8, the solvent existing in the electrode plate 8 can directly or indirectly absorb the energy of the laser beam so as to be instantaneously vaporized, or the particles of the coating layer 82 absorb the energy of the laser beam, so that the temperature at the interface between the particles of the coating layer 82 and the solvent instantaneously increases via interface heat transfer and the temperature at the interface is far more above the vaporization (evaporation) temperature of the solvent, an explosive evaporation of the solvent occurs, thereby generating a strong transient pressure, the particles of the coating layer 82 are peeled off from the current collector 81 under the action of the strong pressure, so as to remove the particles of the coating layer 82. Because the pressure is instantaneously generated, the transient pressure will not damage the electrode plate 8, and the energy of the laser beam is directly or indirectly absorbed by the solvent, the current collector 81 of the electrode plate 8 will not be damaged, meanwhile, the coating layer 82 is removed from the electrode plate 8 under the action of the pressure generated by the instantaneous vaporization of the solvent, the residual stress after the coating layer 82 is removed is small, thereby avoiding the deformation of the electrode plate 8; furthermore, the energy of the laser beam can be directly or indirectly absorbed by the solvent, thereby promoting the energy utilization rate of the laser; after the solvent directly or indirectly absorbs the energy of the laser, an explosive evaporation of the solvent occurs, thereby promoting the removing quality and the removing efficiency.

In the coating layer of the electrode plate according to the present invention, the exposed current collector 81 corresponding to the region where the coating layer 82 has been removed may be used to weld an electrode tab.

In practical operation, different types of well-known laser emitting heads 31 belonging to different series may be used based on difference in materials of the electrode plates (the electrode plate may be an electrode plate of a super capacitor, or an electrode plate of a lithium ion battery, the coating layer may be a positive material layer or a negative material layer).

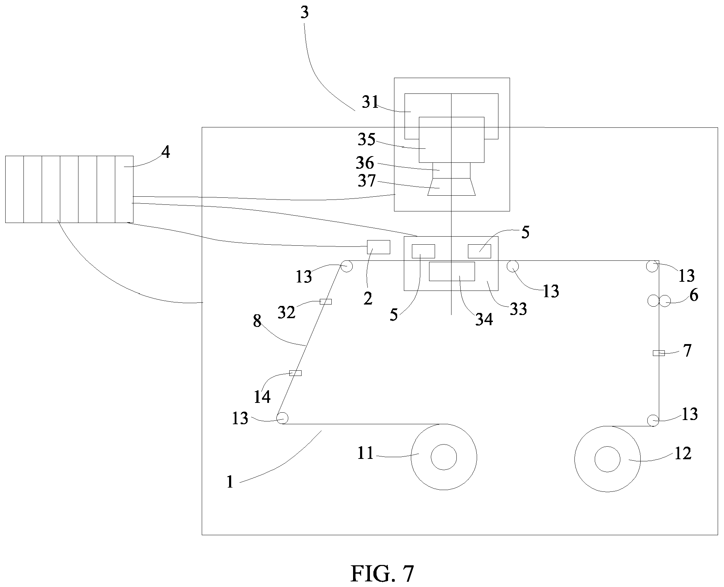

In an embodiment of the conveying system 1, referring to FIG. 7 to FIG. 10, the conveying system 1 may comprise: an unwinding roller 11 provided at an upstream position of the laser removing system 3 for providing and feeding the electrode plate 8 which has the coating layer 82 to be removed; a winding roller 12 provided at a downstream position of the laser removing system 3 for winding the electrode plate 8 where the coating layer 82 has been removed; and a plurality of fixing rollers 13 provided between the unwinding roller 11 and the winding roller 12 for guiding and conveying the electrode plate 8.

In an embodiment of the conveying system 1, referring to FIG. 7 to FIG. 10, the conveying system 1 may further comprise: a deviation rectifying mechanism 14 provided at a downstream position of the unwinding roller 11 for positioning a conveying position of the electrode plate 8 which has the coating layer 82 to be removed.

In an embodiment of the laser removing system 3, referring to FIG. 7 to FIG. 10, the laser removing system 3 may further comprise: a sensor 32 provided at an upstream position of the wetting mechanism 2 for positioning the region R where the coating layer will be removed of the coating layer 82 on a corresponding surface of the electrode plate 8.

In an embodiment of the laser removing system 3, referring to FIG. 7 to FIG. 10, the laser removing system 3 may further comprise: an adsorption fixing mechanism 33 provided at a surface opposite to one surface of the electrode plate 8 on which the laser removing system 3 emits the laser beam and which has the coating layer 82 to be removed, for fixing the region R where the coating layer will be removed of the coating layer 82 on the corresponding one surface of the electrode plate 8. Because the region R where the coating layer will be removed of the coating layer 82 on the corresponding one surface of the electrode plate 8 is fixed by the adsorption fixing mechanism 33, the deformation of the electrode plate 8 during the laser removing process is restrained.

In an embodiment of the laser removing system 3, referring to FIG. 7 to FIG. 10, the laser removing system 3 may further comprise: a cooling mechanism 34 provided at a surface opposite to the one surface of the electrode plate 8 on which the laser removing system 3 emits the laser beam and which has the coating layer 82 to be removed, for absorbing the energy generated during the laser beam emitting process. Therefore, the deformation of the electrode plate 8 caused by heating the electrode plate 8 during the laser removing process may be avoided.

In an embodiment of the device for removing the coating layer of the electrode plate according to the present invention, the adsorption fixing mechanism 33 and the cooling mechanism 34 may be integrally formed, the adsorption fixing mechanism 33 may be a vacuum platform, the cooling mechanism 34 may be a cooling pipeline provided in the vacuum platform.

In an embodiment of the device for removing the coating layer of the electrode plate according to the present invention, referring to FIG. 7 to FIG. 10, the device for removing the coating layer of the electrode plate may further comprise: two dust collecting mechanisms 5 provided between the electrode plate 8 and the laser removing system 3, and provided at two sides of the coating layer 82 within the region R where the coating layer will be removed corresponding to the one surface of the electrode plate 8, so as to remove the particles of the coating layer 82 generated during the laser removing process. In an embodiment, the dust collecting mechanism 5 may be a downdraught dust collecting mechanism having a certain negative pressure. Under the action of the downdraught dust collecting mechanism having the constant negative pressure, the generated particles enter into a particle discharging pipeline (not shown) of the dust collecting mechanism 5, which thus may ensure the particles not to remain on the electrode plate 8, prevent the particles from affecting the property of a product (for example, a super capacitor or a lithium ion battery) using the electrode plate 8, at the same time may further prevent the particles from polluting the environment.

In an embodiment of the laser removing system 3, referring to FIG. 7 to FIG. 10, the laser removing system 3 may further comprise: a beam shaping mechanism 35 provided between the laser emitting head 31 and the electrode plate 8, electrically connected to the laser emitting head 31 for homogenizing the energy of the laser beam emitted from the laser emitting head 31. The beam shaping mechanism 35 can homogenize the energy of the laser beam without damaging the current collector 81 of the electrode plate 8, thereby promoting the welding quality of tabs; also, the beam shaping mechanism 35 will not result in a residue of the coating layer 82, thereby promoting the removing quality, and the high energy and the low energy in the laser beam can be efficiently used, so that the energy of the laser beam can be used to maximum extent so as to promote the energy utilization rate, increase the removing efficiency and the removing quality. The beam shaping mechanism 35 may further convert a spot to a laser beam having a different size and a different shape, for example a rectangle, a square, a circle, an ellipse, a trapezoid and the like. When the energy is constant, depending on difficulty of removing dirt or particles, an outputted laser beam may have a different energy density simply by adjusting an area of the spot, so that the outputted laser beam has great removing capability.

In an embodiment of the laser removing system 3, referring to FIG. 7 to FIG. 10, the laser removing system 3 may further comprise: a galvanometer scanning mechanism 36 provided between the beam shaping mechanism 35 and the electrode plate 8, electrically connected to the beam shaping mechanism 35. The galvanometer scanning mechanism 36 brings the following advantages: the galvanometer scanning mechanism 36 has relative high flexibility in removing pattern, can reach a high scanning speed, allows speed to be stable, has relative high resolution ratio with respect to movement, can allow positioning to be more precisely, can perform fine removing, promote precision in removing size and stability, promote removing quality. Specifically, because during removing, the laser beam needs to ceaselessly accelerate and decelerate at a corner of a region where the coating layer will be removed, a speed of movement of the laser beam is relative high during removing, the galvanometer scanning mechanism 36 can rapidly and accurately realize to position the movement of the laser beam, which can promote the region where the coating layer has been removed in size precision, positioning precision, removing quality and stability, but a laser system with a fixing laser emitting head cannot attain such a speed and precision. Therefore, the present invention can be applied for mass production in industry with high quality and high speed.

In an embodiment of the laser removing system 3, referring to FIG. 7 to FIG. 10, the laser removing system 3 may further comprise: a focusing lens 37 provided between the galvanometer scanning mechanism 36 and the electrode plate 8.

In an embodiment of the device for removing the coating layer of the electrode plate according to the present invention, referring to FIG. 7, the wetting mechanism 2 may be provided as one in number, the one wetting mechanism 2 is correspondingly provided at the one surface of the electrode plate 8 which is conveyed by the conveying system 1 and has the coating layer 82 to be removed; and the laser emitting head 31 may be provided as one in number, the one laser emitting head 31 is correspondingly provided at a downstream position of the one wetting mechanism 2, emits the laser beam and projects the laser beam on the coating layer 82 on the corresponding one surface of the electrode plate 8 within the region R where the coating layer will be removed and which is wetted by the wetting mechanism 2. The present embodiment may be used to perform the coating layer removing operation at only one surface of the electrode plate 8, the result of the electrode plate 8 with the coating layer removed is illustrated in FIG. 1 and FIG. 2. The present embodiment may be also used to perform the coating layer removing operation respectively on the two opposite surfaces of the electrode plate 8, the result of the electrode plate 8 with the coating layers removed is illustrated in FIG. 3, FIG. 4, FIG. 5 and FIG. 6, however, the previous coating layer removing operation will be performed twice.

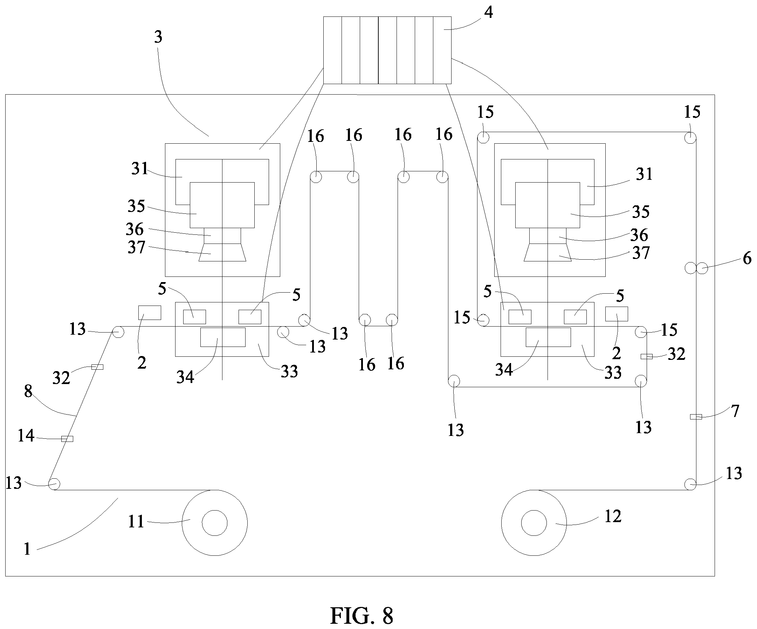

In an embodiment of the device for removing the coating layer of the electrode plate according to the present invention, referring to FIG. 8, the wetting mechanism 2 may be provided as two in number, the two wetting mechanisms 2 are respectively provided at the two opposite surfaces of the electrode plate 8 which is conveyed by the conveying system 1 and has the coating layer 82 to be removed; and the laser emitting head 31 may be provided as two in number, the two laser emitting heads 31 each are provided at a corresponding downstream position of one corresponding wetting mechanism 2, one laser emitting head 31 emits a laser beam and projects the laser beam on the corresponding coating layer 82 on one surface of the electrode plate 8 within the region R where the coating layer will be removed and which is wetted by one wetting mechanism 2, the other laser emitting head 31 emits a laser beam and projects the laser beam on the corresponding coating layer 82 on the other surface of the electrode plate 8 within the region R where the coating layer will be removed and which is wetted by the other wetting mechanism 2. The present embodiment may be used to perform the coating layer removing operation on the two opposite surfaces of the electrode plate 8, the result of the electrode plate 8 with the coating layers removed is illustrated in FIG. 3, FIG. 4, FIG. 5 and FIG. 6, and the coating layer removing operation will be performed only once.

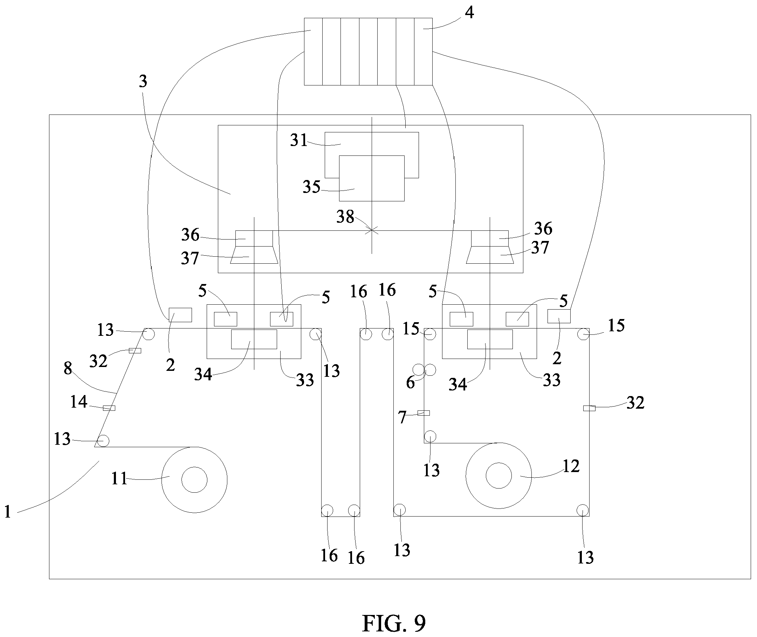

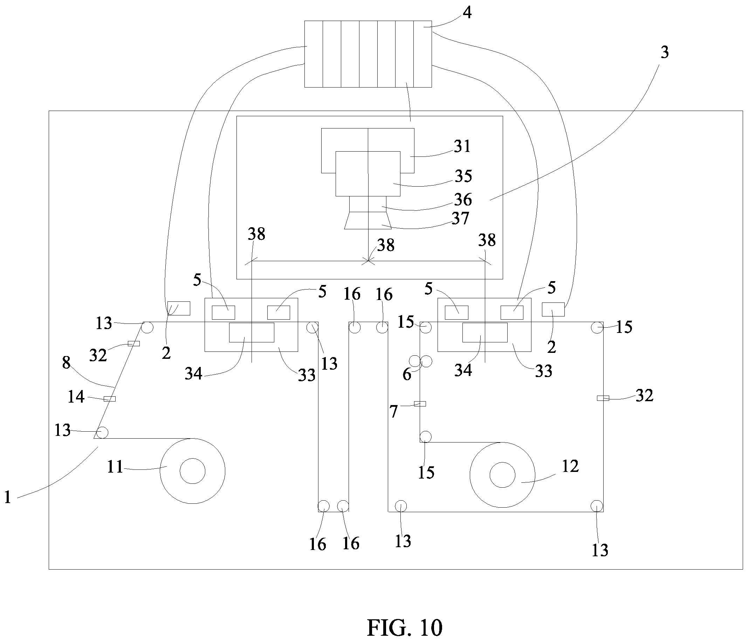

In an embodiment of the device for removing the coating layer of the electrode plate according to the present invention, referring to FIG. 9 and FIG. 10, the wetting mechanism 2 may be provided as two in number, the two wetting mechanisms 2 are respectively provided at the two opposite surfaces of the electrode plate 8 which is conveyed by the conveying system 1 and has the coating layer 82 to be removed; and the laser emitting head 31 may be provided as one in number; the laser removing system 3 may further comprise: at least one beam path switching mechanism 38 provided between the laser emitting head 31 and the electrode plate 8 for changing a transmission direction of the laser beam, so that the laser beam emitted from the laser emitting head 31 can be projected sequentially or simultaneously on one corresponding coating layer 82 on one surface of the electrode plate 8 within the region R where the coating layer will be removed and which is wetted by one corresponding wetting mechanism 2 and the other coating layer 82 on the other surface of the electrode plate 8 within the region R where the coating layer will be removed and which is wetted by the other wetting mechanism 2. The present embodiment may be used to perform the coating layer removing operation on the two opposite surfaces of the electrode plate 8, the result of the electrode plate 8 with the coating layers removed is illustrated in FIG. 3, FIG. 4, FIG. 5 and FIG. 6, and the coating layer removing operation will be performed only once.

In an embodiment of the conveying system 1, referring to FIG. 7 to FIG. 10, the conveying system 1 may further comprise: a plurality of guiding rollers 15 for guiding and conveying the electrode plate 8 so as to make the two opposite surfaces of the electrode plate 8 upside down, and make the electrode plate 8 upside down pass through the laser removing system 3; and a plurality of buffering rollers 16 provided between the two wetting mechanisms 2 so as to make the conveyance of the electrode plate 8 slowly transited when the coating layer removing operation is performed on the two opposite surfaces of the electrode plate 8. Moreover, referring to FIG. 8, the plurality of guiding rollers 15 may further be provided to make the electrode plate 8 which has been upside down and has passed though the laser removing system 3 upside down again, so as to convey the electrode plate 8 to the winding roller 12.

In an embodiment of the device for removing the coating layer of the electrode plate according to the present invention, referring to FIG. 7 to FIG. 10, the device for removing the coating layer of the electrode plate may further comprise: a dust sticking mechanism 6 provided at a downstream position of the laser removing system 3, communicating with the control system 4 for removing the particles and impurities of the residue on the electrode plate 8 after the coating layer 82 is removed. In an embodiment, the dust sticking mechanism 6 may be a dust sticking roller.

In an embodiment of the device for removing the coating layer of the electrode plate according to the present invention, referring to FIG. 7 to FIG. 10, the device for removing the coating layer of the electrode plate may further comprise: a quality monitoring system 7 provided at a downstream position of the laser removing system 3, communicating with the control system 4 for monitoring the removing quality of the coating layer 82 on the electrode plate 8 and feedbacking the monitoring information to the control system 4. If the removing effect is unsatisfactory, it may perform a next coating layer removing operation as the above or perform manual removing.

In the device for removing the coating layer of the electrode plate according to the present invention, the communication may be a wired communication or a wireless communication.

## Claims

1. A device for removing a coating layer of an electrode plate, an electrode plate (8) comprising a current collector (81) and a coating layer (82) coated on each of at least one surface of the current collector (81);
the device for removing the coating layer of the electrode plate comprising:
a conveying system (1) for conveying the electrode plate (8) which has the coating layer (82) to be removed;
at least one wetting mechanism (2), each wetting mechanism (2) being provided at the coating layer (82) to be removed on one surface of the electrode plate (8) which is conveyed by the conveying system (1) and wetting the coating layer (82) on the one surface of the electrode plate (8) within the region (R) where the coating layer will be removed by using a solvent;
a laser removing system (3) comprising: at least one laser emitting head (31) for emitting a laser beam and projecting the laser beam onto the coating layer (82) on the corresponding surface of the electrode plate (8) within the region (R) where the coating layer will be removed and which is wetted by the wetting mechanism (2) to make the solvent which wets the coating layer (82) of the electrode plate (8) within the region (R) where the coating layer will be removed vaporized, so as to remove the coating layer (82) on the surface of the electrode plate (8) within the region (R) where the coating layer will be removed and in turn expose the current collector (81) on the surface of the electrode plate (8) corresponding to the region (R) where the coating layer will be removed; and
a control system (4) communicating with the conveying system 1, the at least one wetting mechanism (2) and the laser removing system (3).

2. The device for removing the coating layer of the electrode plate according to Claim 1, wherein the conveying system (1) comprises:
an unwinding roller (11) provided at an upstream position of the laser removing system (3) for providing and feeding the electrode plate (8) which has the coating layer (82) to be removed;
a winding roller (12) provided at a downstream position of the laser removing system (3) for winding the electrode plate (8) where the coating layer (82) has been removed; and
a plurality of fixing rollers (13) provided between the unwinding roller (11) and the winding roller (12) for guiding and conveying the electrode plate (8).

3. The device for removing the coating layer of the electrode plate according to Claim 1, wherein the conveying system (1) further comprises: a deviation rectifying mechanism (14) provided at a downstream position of the unwinding roller (11) for positioning a conveying position of the electrode plate (8) which has the coating layer (82) to be removed.

4. The device for removing the coating layer of the electrode plate according to Claim 1, wherein the laser removing system (3) further comprises: a sensor (32) provided at an upstream position of the wetting mechanism (2) for positioning the region (R) where the coating layer will be removed of the coating layer (82) on a corresponding surface of the electrode plate (8).

5. The device for removing the coating layer of the electrode plate according to Claim 1, wherein the laser removing system (3) further comprises: an adsorption fixing mechanism (33) provided at a surface opposite to one surface of the electrode plate (8) on which the laser removing system (3) emits the laser beam and which has the coating layer (82) to be removed, for fixing the region (R) where the coating layer will be removed of the coating layer (82) on the corresponding one surface of the electrode plate (8).

6. The device for removing the coating layer of the electrode plate according to Claim 1, wherein the laser removing system (3) further comprises: a cooling mechanism (34) provided at a surface opposite to the one surface of the electrode plate (8) on which the laser removing system (3) emits the laser beam and which has the coating layer (82) to be removed, for absorbing the energy generated during the laser beam emitting process.

7. The device for removing the coating layer of the electrode plate according to Claim 5, wherein the laser removing system (3) further comprises: a cooling mechanism (34) provided at a surface opposite to the one surface of the electrode plate (8) on which the laser removing system (3) emits the laser beam and which has the coating layer (82) to be removed, for absorbing the energy generated during the laser beam emitting process.

8. The device for removing the coating layer of the electrode plate according to Claim 7, wherein the adsorption fixing mechanism (33) and the cooling mechanism (34) are integrally formed, the adsorption fixing mechanism (33) is a vacuum platform, the cooling mechanism (34) is a cooling pipeline provided in the vacuum platform.

9. The device for removing the coating layer of the electrode plate according to Claim 1, wherein the device for removing the coating layer of the electrode plate further comprises: two dust collecting mechanisms (5) provided between the electrode plate (8) and the laser removing system (3), and provided at two sides of the coating layer (82) within the region (R) where the coating layer will be removed corresponding to the one surface of the electrode plate (8), so as to remove the particles of the coating layer (82) generated during the laser removing process.

10. The device for removing the coating layer of the electrode plate according to Claim 9, wherein the dust collecting mechanism (5) is a downdraught dust collecting mechanism having a certain negative pressure.

11. The device for removing the coating layer of the electrode plate according to Claim 1, wherein the laser removing system (3) further comprises: a beam shaping mechanism (35) provided between the laser emitting head (31) and the electrode plate (8), electrically connected to the laser emitting head (31) for homogenizing the energy of the laser beam emitted from the laser emitting head (31).

12. The device for removing the coating layer of the electrode plate according to Claim 11, wherein the laser removing system (3) further comprises: a galvanometer scanning mechanism (36) provided between the beam shaping mechanism (35) and the electrode plate (8), electrically connected to the beam shaping mechanism (35).

13. The device for removing the coating layer of the electrode plate according to Claim 12, wherein the laser removing system (3) further comprises: a focusing lens (37) provided between the galvanometer scanning mechanism (36) and the electrode plate (8).

14. The device for removing the coating layer of the electrode plate according to Claim 1, wherein
the wetting mechanism (2) is provided as one in number, the one wetting mechanism (2) is correspondingly provided at the one surface of the electrode plate (8) which is conveyed by the conveying system (1) and has the coating layer (82) to be removed; and
the laser emitting head (31) is provided as one in number, the one laser emitting head (31) is correspondingly provided at a downstream position of the one wetting mechanism (2), emits the laser beam and projects the laser beam on the coating layer (82) on the corresponding one surface of the electrode plate (8) within the region (R) where the coating layer will be removed and which is wetted by the wetting mechanism (2).

15. The device for removing the coating layer of the electrode plate according to Claim 1, wherein
the wetting mechanism (2) is provided as two in number, the two wetting mechanisms (2) are respectively provided at the two opposite surfaces of the electrode plate (8) which is conveyed by the conveying system (1) and has the coating layer (82) to be removed; and
the laser emitting head (31) is provided as two in number, the two laser emitting heads (31) each are provided at a corresponding downstream position of one corresponding wetting mechanism (2), one laser emitting head (31) emits a laser beam and projects the laser beam on the corresponding coating layer (82) on one surface of the electrode plate (8) within the region (R) where the coating layer will be removed and which is wetted by one wetting mechanism (2), the other laser emitting head (31) emits a laser beam and projects the laser beam on the corresponding coating layer (82) on the other surface of the electrode plate (8) within the region (R) where the coating layer will be removed and which is wetted by the other wetting mechanism (2).

16. The device for removing the coating layer of the electrode plate according to Claim 1, wherein
the wetting mechanism (2) is provided as two in number, the two wetting mechanisms (2) are respectively provided at the two opposite surfaces of the electrode plate (8) which is conveyed by the conveying system (1) and has the coating layer (82) to be removed; and
the laser emitting head (31) is provided as one in number;
the laser removing system (3) further comprises: at least one beam path switching mechanism (38) provided between the laser emitting head (31) and the electrode plate (8) for changing a transmission direction of the laser beam, so that the laser beam emitted from the laser emitting head (31) can be projected sequentially or simultaneously on one corresponding coating layer (82) on one surface of the electrode plate (8) within the region (R) where the coating layer will be removed and which is wetted by one corresponding wetting mechanism (2) and the other coating layer (82) on the other surface of the electrode plate (8) within the region (R) where the coating layer will be removed and which is wetted by the other wetting mechanism (2).

17. The device for removing the coating layer of the electrode plate according to Claim 15 or 16, wherein the conveying system (1) further comprises:
a plurality of guiding rollers (15) for guiding and conveying the electrode plate (8) so as to make the two opposite surfaces of the electrode plate (8) upside down, and make the electrode plate (8) upside down pass through the laser removing system (3); and
a plurality of buffering rollers (16) provided between the two wetting mechanisms (2) so as to make the conveyance of the electrode plate (8) slowly transited when the coating layer removing operation is performed on the two opposite surfaces of the electrode plate (8).

18. The device for removing the coating layer of the electrode plate according to Claim 1, wherein the device for removing the coating layer of the electrode plate further comprises: a dust sticking mechanism (6) provided at a downstream position of the laser removing system (3), communicating with the control system (4) for removing the particles and impurities of the residue on the electrode plate (8) after the coating layer (82) is removed.

19. The device for removing the coating layer of the electrode plate according to Claim 18, wherein the dust sticking mechanism (6) is a dust sticking roller.

20. The device for removing the coating layer of the electrode plate according to Claim 1, wherein the device for removing the coating layer of the electrode plate further comprises: a quality monitoring system (7) provided at a downstream position of the laser removing system (3), communicating with the control system (4) for monitoring the removing quality of the coating layer (82) on the electrode plate (8) and feedbacking the monitoring information to the control system (4).

21. The device for removing the coating layer of the electrode plate according to Claim 1, 18 or 20, wherein the communication is a wired communication or a wireless communication.
